# EUROPEAN PATENT SPECIFICATION

(11) **EP 1 793 926 B1**
(45) Date of publication and mention of the grant of the patent: **23.11.2016**
(21) Application number: 05787430.7
(22) Date of filing: 21.09.2005
(51) Int. Cl.: B01J 20/26, B01J 20/285, B01J 20/291

(54) **METHOD OF PREPARING A CHROMATOGRAPHY MATRIX**
VERFAHREN ZUR HERSTELLUNG EINER CHROMATOGRAFISCHEN MATRIX
PROCEDE DE PREPARATION D'UNE MATRICE DE CHROMATOGRAPHIE

(30) Priority: 22.09.2004 SE 0402322; 27.12.2004 SE 0403173
(43) Date of publication of application: 13.06.2007
(73) Proprietor: GE Healthcare BioProcess R&D AB, 751 84 Uppsala (SE)
(72) Inventor: BERG, Hans, Amersham Biosciences, S-751 84 UPPSALA (SE); HOLM, Maria, Amersham Biosciences, S-34334 Älmhult (SE); BUCKLEY, David, S-753 32 Uppsala (SE); HAGVALL, Anders, Amersham Biosciences, S-751 84 Uppsala (SE); HOLMGREN, Eva, Amersham Biosciences, S-751 84 Uppsala (SE); IHRE, Henrik, Amersham Biosciences, S-751 84 Uppsala (SE); LARSSON, Anders, Amersham Biosciences, S-751 84 Uppsala (SE); LINDSTRÖM, Dag, S-743 50 Vattholma (SE)
(74) Representative: Aldenbäck, Ulla Christina
(86) International application number: PCT/SE2005/001408
(87) International publication number: WO 2006/033634

(56) References cited:
- WO-A-00/17257
- WO-A-02/053598
- WO-A1-89/11493
- WO-A1-97/04011
- US-A- 3 507 851
- US-A- 3 956 273
- US-A- 4 973 683
- US-A- 5 212 299
- US-B1- 6 602 990

## Description

### Technical field

The present invention relates to separation and purification of target compounds, such as biomolecules, and more specifically to a chromatography matrix and a novel method for preparing the same. The invention also encompasses the use of such a matrix in liquid chromatography, and a chromatography column packed with the matrix.

### Background

The recent advances in the field of biotechnology have required faster and more accurate techniques for recovery, purification and analysis of biological and biochemical substances, such as proteins. Electrophoresis and chromatography are two commonly used such techniques.

In electrophoresis, charged particles are separated by migration in an electric field. More specifically, a sample is placed on a soft solid support medium, such as an agarose or polyacrylamide gel slab, which in turn is placed between two electrodes, a positively charged anode and a negatively charged cathode. As the current is switched on, each component of the sample will migrate at a characteristic rate determined by its net charge and its molecular weight. One essential property of a well working electrophoresis gel is its melting point, which affects the ability to extract the migrated target compounds from separate gel spots. Thus, a low melting point gel is commonly advantageous. Native agarose is commonly used in electrophoresis gels, but they have been noted to involve some problems. For example, even though the coarse pore structure of the native agarose is excellent for resolving large macromolecules, for smaller molecules smaller molecular weight agarose must be prepared. This is commonly obtained by increasing the agarose content of the gel, which however produces high viscosities in the solutions rendering casting of gels thereof difficult. To overcome such problems and others, modified agarose has been suggested for electrophoresis gels:
Electrophoresis is discussed in US 3,956,273 (Guiseley), which relates to agarose or agar compounds useful for electrophoresis or diffusive interactions, but also as thickeners. The compounds have been modified with alkyl and alkenyl groups in order to lower their gelling and melting temperatures, and to increase their clarity as compared to the unmodified material. More specifically, the agar or agarose is first dissolved in strong alkali, after which a suitable reagent is added to provide the modification. A difunctional agent such as epichlorohydrin may be used, but only under conditions which prevent cross-linking.

Electrophoresis is also discussed in US 5,143,646 (Nochumson et al), which relates to electrophoretic resolving gel compositions comprising polysaccharide hydrogels, such as agarose, which has been derivatised and depolymerised sufficiently to reduce its casting-effective viscosity. The disclosed compositions do not require any cross-linking or polymerising agents.

Further, US 5,541,255 (Kozulic) relates to gels for electrophoresis, and more specifically to cross-linked linear polysaccharide polymers. The gels are formed by dissolving a polysaccharide in a solvent such as water; adding a cross-linking agent, which is not charged nor which becomes charged upon contact with water; and incubating the mixture in a quiescent state to simultaneously react the polysaccharide and the cross-linking agent and to gel the product into a slab. According to US 5,541,255, the prior art electrophoresis gels could be redissolved by water, while the US 5,541,255 invention provides a gel which is water insoluble. These properties are obtained due to the simultaneous cross-linking and gelation, and also due to the high ratio of cross-linker to polysaccharide.

In chromatography, two mutually immiscible phases are brought into contact. More specifically, the target compound is introduced into a mobile phase, which is contacted with a stationary phase. The target compound will then undergo a series of interactions between the stationary and mobile phases as it is being carried through the system by the mobile phase. The interactions exploit differences in the physical or chemical properties of the components in the sample. In liquid chromatography, a liquid sample, optionally combined with a suitable buffer constitutes the mobile phase, which is contacted with a stationary phase, known as a separation matrix. Usually, the matrix comprises a support to which ligands, which are groups capable of interaction with the target, have been coupled.

Separation matrices are commonly based on supports made from inorganic materials, such as silica, or organic materials, such as synthetic or natural polymers, or the like. The synthetic polymers, such as styrene and divinylbenzene, are often used for supports that exhibit some hydrophobicity, such as size exclusion chromatography, hydrophobic interaction chromatography (HIC) and reverse phase chromatography (RPC). Further, the synthetic polymers are sometimes preferred over natural polymers due to their flow properties, which may be more advantageous since synthetic polymers are often more rigid and pressure-resistant than the commonly used natural polymer supports.

The natural polymers, which are commonly polysaccharides such as agarose, have been utilised as supports of separation matrices for decades. Due to the presence of hydroxyl groups, the surfaces of the natural polymers are usually hydrophilic, giving essentially no non-specific interactions with proteins. Another advantage of the natural polymers, which is of specific importance in the purification of drugs or diagnostic molecules for internal human use, is their non-toxic properties. Agarose can be dissolved in water at increased temperature, and will then form a porous gel upon cooling to a certain temperature (the gelling point). On heating, the gel will melt again at a temperature (the melting point), which is usually considerably higher than the gelation point. The gelation involves helix-helix aggregation of the polysaccharide polymers, and is sometimes referred to as a physical cross-linking. To optimise the target mass transport rate and the area with which the target interacts, it is often desired to increase the porosity of the support, which can be achieved by varying the agarose concentration. However, another essential parameter to consider is the flow properties of the support. The matrix is normally used in the form of a packed bed of particles (spherical or non-spherical). When the mobile phase is forced through the bed, the back pressure of the bed will mainly be controlled by the interstitial channels between the particles. At low flow rates, the particles can be regarded as incompressible and then the back pressure increases linearly with the flow rate, with the slope depending on the particle size. At higher flow rates, the particles may start to deform under the hydrostatic pressure, resulting in diminishing diameters of the interstitial channels and a rapidly increasing back pressure. At a certain flow rate, depending on the rigidity of the matrix, the bed will collapse and the back pressure approaches infinity unless it is switched off automatically by the chromatography system. To improve the rigidity and hence the flow properties of agarose, it is frequently cross-linked. Such cross-linking takes place between available hydroxyl groups, and may be obtained e.g. with epichlorohydrin.

US 4,973,683 (Lindgren) relates to the cross-linking of porous polysaccharide gels, and more specifically to a method of improving the rigidity while minimising the non-specific interaction of a porous polysaccharide gel. The method involves providing an agarose gel and a reagent denoted "monofunctional", which comprises a reactive group, such as a halogen group or an epoxide group, and a double bond. The reagent is bound to the gel via its reactive group; and the double bond is then activated into an epoxide or halohydrin, which is finally reacted with hydroxyl groups on the agarose to provide cross-linking.

US 5,135,650 (Hjertén et al) relates to highly compressible chromatographic stationary phase particles, such as agarose beads, which are sufficiently rigid for HPLC and nonporous to the extent that it is impenetrable by solutes. More specifically, such beads are produced by starting from porous agarose beads, which are contacted with an organic solvent to collapse the porosity, after which the bead surfaces inside the collapsed pores are cross-linked to fix the pores in their collapsed state. Alternatively, the beads are produced by filling the pores with a polymerisable substance, which grafts to the pore surfaces, and performing graft polymerisation. One stated advantage of the invention disclosed is that a single stationary phase is effective at high pressures and yet can be used at low pressures.

US 6,602,990 (Berg) relates to a process for the production of a porous cross-linked polysaccharide gel, wherein a bifunctional cross-linking agent is added to a solution of polysaccharide and allowed to bind via its active site to the hydroxyl groups of the polysaccharide. A polysaccharide gel is then formed from the solution, after which the inactive site of the cross-linking agent is activated and cross-linking of the gel performed. Thus, the cross-linking agent is introduced into the polysaccharide solution, contrary to the above discussed methods wherein it is added to a polysaccharide gel. The bifunctional cross-linking agent comprises one active site, i.e. a site capable of reaction with hydroxyl groups of the polysaccharide, such as halides and epoxides, and one inactive site, i.e. a group which does not react under the conditions where the active site reacts, such as allyl groups. Thus, the present bifunctional cross-linking agent corresponds to the "monofunctional reagents" used according to the above-discussed US 4,973,683 (Lindgren). Particles comprised of the resulting gel have been shown to present an improved capability of withstanding high flow rates and back pressures. A drawback with the US 6,602,990 method is that bromine is required for the activation of the cross-linking agent.

Finally, US 5,998,606 (Grandics) relates to a method of synthesising chromatography media, wherein cross-linking and functionalisation of a matrix takes place simultaneously. More specifically, double bonds provided at the surface of a polymeric carbohydrate matrix are activated in the presence of a metallic catalyst to cross-link the matrix and functionalise it with halohydrin, carboxyl or sulphonate groups. The double bonds are provided at the matrix surface by contact with an activating reagent, which contains a halogen atom or epoxide and a double bond. Thus, the US 5,998,606 activating reagent corresponds to the US 4,973,683 monofunctional reagent and the US 6,602,990 bifunctional cross-linking agent.

Thus, even though there are a number of techniques available for producing cross-linked polysaccharide separation matrices, since different applications will put different requirements on the matrix, there is still a need within this field of alternative methods.

### Brief description of the invention

In one aspect of the present invention, a method is provided for preparing a rigid cross-linked polysaccharide chromatography matrix.

In another aspect of the invention, a method is provided for preparing a highly porous cross-linked polysaccharide chromatography matrix.

In a specific aspect of the invention, a method is provided for preparing a rigid cross-linked polysaccharide chromatography matrix, which method utilises different materials and/or starting materials. In a specific aspect, a method is provided wherein the use of halogens such as bromine is avoided.

In yet another aspect of the invention, a chromatography matrix is provided, which is comprised of cross-linked polysaccharide particles and which can withstand high flow rates and/or back pressures.

Furthermore, in an additional aspect, a disposable system comprising a cross-linked polysaccharide matrix is provided. The disposable system according to the invention, which comprises a chromatography column packed with particles, is sterile and may comprise the details required for integration into a process. These and other objects may be achieved as defined in the appended claims. Other objects and advantages of the present invention will appear from the detailed description that follows.

### Definitions

The term separation "matrix" means herein a material comprised of a porous or nonporous solid support, to which ligands have been attached. In the field of chromatography, the matrix is sometimes denoted resin or media.

The term "target compound" means herein any compound or other entity which is the desired target in a process.

The term "ligands" is used herein in its conventional meaning, i.e. for chemical entities which are capable of interacting with a target compound, such as charged groups capable of interacting with an oppositely charged target compound in an ion-exchange process.

Kₐᵥ is a gel filtration (size exclusion chromatography) parameter defined as (Vₑ-V₀)/(Vₜ-V₀), where Vₑ is the elution volume of the test molecule peak, V₀ is the void volume of the column and Vₜ is the total bed volume. Kₐᵥ is a measure of the fraction of the stationary phase volume accessible to the particular test molecule.

K_{av DX} is K_{AV} for dextran molecules. In the examples, dextrans of molecular weight 110 kD, 500 kD and 1000 kD have been used.

The term "gelling point", sometimes herein denoted the "gelling temperature" means the temperature at which the polymers of a solution interacts physically to form a solid gel. The term "gellable" means herein capable of forming a physical gel.

The term "cross-linker" as used herein encompasses chemical entities capable of forming cross-linking chains between polymers; as well as agents capable of providing cross-linking of polymer chains in the presence of the appropriate reagents, such as gamma-irradiation and electron bombardment.

The term "substantially sterile" means herein that substantially no viable microorganisms are present.

The term "sterilization" means herein the process of making an object free of viable microorganisms.

### Detailed description of the invention

A method of preparing a cross-linked polysaccharide chromatography matrix is disclosed, which method comprises
(a) providing an aqueous solution of at least one gellable polysaccharide, wherein at least part of the hydroxyl groups are substituted with groups which are not susceptible to nucleophilic attack and which are selected from the group consisting of methyl, ethyl, propyl, butyl, hydroxypropyl, hydroxybutyl and hydroxyethyl ethers;
(b) providing essentially spherical droplets of the substituted polysaccharide solution;
(c) forming a gel of the substituted polysaccharide solution; and
(d) cross-linking the gel.

The present invention relates to a method of preparing a cross-linked polysaccharide chromatography matrix, which method comprises
(a) providing an aqueous solution of at least one gellable polysaccharide and substituting at least part of the hydroxyl groups of the polysaccharide in the aqueous solution with groups which are not susceptible to nucleophilic attack and which are selected from the group consisting of methyl, ethyl, propyl, butyl, hydroxypropyl, hydroxybutyl and hydroxyethyl ethers;
(b) providing essentially spherical droplets of the substituted polysaccharide solution;
(c) forming a gel of the substituted polysaccharide solution; and
(d) cross-linking the gel,
   wherein the part of the hydroxyl groups in the polysaccharide which are substituted is 1-20%.

In the method above, "not susceptible to nucleophilic attack" refers to the properties of the groups obtained on the polysaccharide after substitution.

Thus, in the first embodiment, the starting material is pre-substituted polysaccharide, while in the specific embodiment; the invention also comprises the steps of substituting hydroxyl groups of the polysaccharide. As the skilled person knows, available hydroxyl groups are present on all surfaces of the polysaccharide, and accordingly the substituents will be present on pore surfaces as well as on the external surfaces of the matrix. More specifically, the polysaccharide provided has been substituted with groups which are not susceptible to nucleophilic attacks. Consequently, such groups are not reactive with hydroxyl groups, and are therefore sometimes herein denoted "non-reactive groups" or simply substituents. The opposite kind of groups, i.e. groups which are "reactive" in the present context, are electrophilic groups or groups that are easily converted to electrophilic groups, such as e.g. allyl groups (easily epoxidised), epoxides, halohydrins, α,β-unsaturated carbonyls, which are all readily reactive with hydroxyl groups. By using non-reactive groups, the stability of the substituted polymer is improved and it is easier to control the subsequent cross-linking step. The part of the hydroxyl groups which are substituted in the polysaccharide according to the present invention is can be about 10%, such as about 5% and more specifically about 2%. Specifically, the part of the hydroxyl groups which is substituted is in a range of 1-20%, such as 2-10% and more specifically 2-5%.

The substituents present on the polysaccharide are ethers, selected from the group consisting of methyl, ethyl, propyl, and butyl ethers, hydroxypropyl and hydroxybutyl ethers-In an advantageous embodiment, part of the hydroxyl groups of the polysaccharide is substituted with hydroxyethyl ether groups.

Pre-substituted polysaccharides are commercially available e.g. from Cambrex Bioproducts, USA. In the best embodiment of the invention, the substituted polysaccharide is hydroxyethyl agarose. Methods of modifying polysaccharides are readily available to those of skill in this field; see e.g. US 3,956,273, which relates to electrophoresis gels comprised of such substituted polysaccharides. As discussed in US 3,956,273, the substitution of the polysaccharide lowers its gelling temperature, which would have been expected to disturb the pore structure of the product and which obviously is a sign of a weaker binding. However, the present invention shows the contrary, as the chromatography matrices prepared according to the invention exhibits improved flow properties as compared to the corresponding cross-linked product made from non-substituted polysaccharide, see experimental part below.

The cross-linking of the gel so obtained may be carried out according to any well known method in the field, such as by adding a cross-linking agent which reacts with hydroxyl groups of the polysaccharide.

In a first embodiment, the cross-linking is a well known two step process using a cross-linking agent comprising one reactive group, such as an epoxide, and one group which is activatable, such as an allyl group, as described e.g. in see e.g. in the above-discussed US 4,973,683.

In an alternative embodiment, the cross-linking is provided in a single step by adding a cross-linking agent which comprises two reactive groups. Thus, in this embodiment, there is no need to activate the cross-linking agent.

Examples of commonly used cross-linking agents useful as described above comprise e.g. isocyanates, epoxides, methylol compounds, halohydrins, alkyl halogenides or Michael addition acceptors (such as vinylsulfones). Cross-linking agents which are useful in the present method are readily available from commercial sources.

As is well known, gamma-irradiation or electron-bombardment may be used to activate activatable groups of a cross-linking agent. In a specific embodiment, gamma-irradiation or electron-bombardment is used to provide cross-linking of the polysaccharide polymers.

In one embodiment, the non-reactive substituents i.e. groups that are not susceptible of nucleophilic attack are cleaved off after cross-linking. It is understood that the way of cleaving off such groups will depend on the nature of the group, and the skilled person in this field can easily select the suitable conditions for each case.

Available hydroxyl groups of the polysaccharide are then further functionalised to the desired kind of chromatography matrix, as discussed below. However, even though the main role of the non-reactive substituents of the polysaccharide in the present method is to allow the polysaccharide solution to form the specific cross-linked gel that presents the improved flow properties shown in the experimental part, they can also be used for further functionalisation. In an advantageous embodiment, both the non-reactive substituents and any remaining non-substituted hydroxyl groups are functionalised. Such functionalisation may be provided with charged groups into an ion-exchange matrix; with groups that exhibits biological affinity into an affinity matrix; with chelating groups into an immobilised metal affinity chromatography (IMAC) matrix; or with hydrophobic groups into a hydrophobic interaction chromatography (HIC) matrix. In a specific embodiment, the functional groups are ion-exchange ligands selected from the group that consists of quaternary ammonium (Q), diethylaminoethyl (DEAE), diethylaminopropyl (ANX), sulphopropyl (SP), and carboxymethyl (CM) groups. Thus, in an alternative embodiment, the non-reactive substituents are used in a subsequent step for attachment of chromatography ligands. The substituents are ether groups. Methods for attachment of such functional groups to a support are well known to the skilled person in this field and may involve a preceding step of allylation of the substituent and use of standard reagents and conditions. (See e.g. Immobilized Affinity Ligand Techniques, Hermanson et al, Greg T. Hermanson, A. Krishna Mallia and Paul K. Smith, Academic Press, INC, 1992.) In a specific embodiment, the non-reactive substituents constitute the ligands, e.g. by providing hydrophobic interactions with a target substance. In such HIC chromatography, an illustrative substituent would be alkyl ether groups.

In a specific embodiment, groups that distance the ligands from the gel surface are coupled to the polysaccharide in a step preceding the above-discussed ligand coupling. Such distancing groups are known as extenders, flexible arms, tentacles etc, and may be linear or branched. A commonly used hydrophilic extender suitable for polysaccharide-based matrices is dextran, which is commercially available in various molecular weights. Other kinds of extenders are based on synthetic polymers or copolymers. The skilled person can easily attach ligands via extenders to the present chromatography matrix using well known methods. Further, the chromatography matrix may comprise stimulus-responsive polymers, which are polymers known to undergo a physical or chemical change under a physical stimulus such as light, a magnetic field, temperature, pH etc, see e.g. US 6,641,735 (Japan Chemical Innovation Institute). As is well known, such changes may be utilised to affect or improve the binding of and/or release from ligands.

Further, it is well known in this field that the gelling point of a polysaccharide may be modified by adding functionalities to the polysaccharide polymers. Thus, in a specific embodiment, the non-reactive substituents of the polysaccharide are functionalised in order to change the gelling point of the polysaccharide. The functionalisation may add any well known group(s), such as discussed above. Any of, or both the non-reactive substituents and any remaining non-substituted hydroxyl groups, may be functionalised to this end. The present invention embraces any novel form of polysaccharide gel, such as agarose, obtained by the modification according to the invention.

The polysaccharide may be selected from the group that consists of agarose, agar, cellulose, dextran, pectin, starch, chitosan, konjac, curdlan, carrageenan, gellan, and alginate. In an advantageous embodiment of the present method, the polysaccharide is agarose. In this context, it is understood that the term "agarose" embraces any derivative or modified agarose that is capable of providing the improved rigidity gel obtained according to the invention. In a specific embodiment, the present method utilises a mixture of two or more of the above-exemplified polysaccharides.

The melting and/or gelling temperature of the polysaccharide is at least about 1°C lower than the corresponding non-substituted polysaccharide.

A method of preparing a cross-linked polysaccharide chromatography matrix, may comprise
(a) providing an aqueous solution of at least one gellable polysaccharide, wherein part of the hydroxyl groups are allylated;
(b) providing essentially spherical droplets of the substituted polysaccharide solution;
(c) forming a gel of the substituted polysaccharide solution; and
(d) cross-linking the gel, during which the allyl groups of step (a) do not participate.

Thus, as understood by the skilled person in this field, the cross-linking is provided by utilising hydroxyl groups which are not allylated in step (a), preferably by reaction with an appropriate cross-linking agent as discussed above. Thus, the term "part of" the hydroxyl groups is understood in this context to mean "some but not all". The above-discussed cross-linking methods are equally applicable to this embodiment. By performing step (d) as the only cross-linking of the gel, a chromatography matrix is obtained which present the herein discussed advantages of improved rigidity compared to conventionally cross-linked matrices.

Accordingly, this aspect differs from the above discussed US 6,602,990 (Berg), wherein a bifunctional cross-linking agent is added to a solution of polysaccharide and allowed to bind via its active site to the hydroxyl groups of the polysaccharide. As appears from US 6,602,990, said bifunctional cross-linking agents are e.g. allyl groups.

However, the allyl groups added before gelling are not used in the cross-linking of the gel. Instead, they are advantageously converted to hydrophilic groups, such as hydroxyl groups, after cross-linking. Thus, the allyl groups may be eliminated after the cross-linking in a separate step, e.g. by reaction with thioglycerol or mercaptoethanol into hydroxyl groups. Such reaction is an addition under free radical conditions, which is a well known reaction easily performed by the skilled person in this field.

In an alternative embodiment, the allyl groups provided on the polysaccharides before gelling, which are not utilised in subsequent cross-linking, may be functionalised as discussed above in the context of the non-reactive substituents.

In addition to the allyl groups, the gellable polysaccharide comprises hydroxyl groups substituted with groups which are not susceptible to nucleophilic attack.

In one embodiment of the present method, the chromatography matrix is comprised of porous, essentially spherical particles. The average particle size of the particles may be in a range of 10-300 µm, preferably 30-200 µm or more preferably 45-165 µm, such as about 45 µm, in diameter. Such porous polysaccharide supports are easily prepared by the skilled person in this field according to standard methods, such as inverse suspension gelation (S Hjertén: Biochim Biophys Acta 79(2), 393-398 (1964). For example, when preparing agarose, the essentially spherical droplets of polysaccharide solution are obtained by first dissolving or dispersing the agarose in an aqueous solvent, such as water, or any other commonly used solvent, at a temperature above the melting point of the specific polysaccharide. If required, a porogen may be added to ensure the desired porosity of the product. In the case of a non-substituted polysaccharide, it is then substituted as discussed above. The dissolved substituted polysaccharide is then emulsified in a commonly used organic solvent such as toluene or heptane with stirring, after which the temperature is lowered to below the gelling point of the polysaccharide, such as room temperature. The particles so produced may be washed to remove any trace of solvent and cross-linked as discussed above. Thus, in one embodiment of the present method, the dissolved substituted polysaccharide is emulsified in an organic solvent. In an alternative embodiment, the essentially spherical droplets of polysaccharide solution are obtained by spraying a composition of a thermally-gelling polymer in an aqueous medium into ambient air and allowing the atomised composition to gel in the air, as disclosed in US 6,248,268 (FMC Corporation), In a specific embodiment, the aqueous solution of polysaccharide is provided by heating and the gel is formed by reducing the temperature.

In one embodiment of the present method, a porogen is added before gelation to provide a suitable pore size. Suitable porogens are well known to the skilled person in this field. In this context, the present chromatography matrix may exhibit a porosity of at least about 90%, such as about 94% and more specifically about 96%.

The present invention also encompasses a method of providing a sterile column packed with a cross-linked polysaccharide chromatography matrix according to claim 9. More specifically, the method comprises
(a) providing an aqueous solution of at least one gellable polysaccharide;
(b) providing essentially spherical droplets of the substituted polysaccharide solution;
(c) forming a gel of the substituted polysaccharide solution;
(d) cross-linking the gel;
(e) packing the cross-linked gel in a chromatography column; and
(f) sterilizing the packed column by radiation; steam; or autoclavation.

In a specific embodiment, the method according to the invention comprises a step, wherein the cross-linked chromatography matrix obtained according to the present invention is packed in a chromatography column. In one embodiment, the packed column is then subjected to sterilization. In an alternative embodiment, the present method comprises separate sterilization of the polysaccharide chromatography matrix and aseptic assembly into a sterile packed column. The chromatography column according to this aspect is of a kind commonly known as a disposable column or sometimes "single use chromatography column", and is especially advantageous for medical and/or diagnostic products. In this context, it is understood that the term "single use" means one or a limited number of uses, such as 1-3 uses.

A second aspect of the invention is a chromatography matrix produced as described above. In one embodiment, the chromatography matrix is comprised of essentially spherical particles and exhibits a Kₐᵥ value for a dextran of 110kDa of at least about 0.4, preferably >0.5.

In another embodiment, the chromatography matrix comprises a membrane or filter. In yet another embodiment, the chromatography matrix comprises a monolith. In further embodiments, the chromatography matrix comprises a surface, a chip, a fibre or the like.

In a specific aspect, the chromatography matrix according to the invention has been prepared according to steps (a)-(f) above.

A third aspect of the invention is a chromatography column packed with a matrix prepared as described above. In an advantageous embodiment, the column is made from any conventional material, such as a biocompatible plastic, e.g. polypropylene, or glass. The column may be of a size suitable for laboratory scale or large-scale purification. In a specific embodiment, the column according to the invention is provided with luer adaptors, tubing connectors, and domed nuts. Thus, the present invention also encompasses a kit comprised of a chromatography column packed with a chromatography matrix as described above; at least one buffer; and written instructions for purification of target compounds; in separate compartments. The invention also encompasses the present chromatography matrix contained in any other format, such as a fluidised bed of particles in a column or vessel; in batch vessels; or applied onto a surface, such as a membrane or a chip.

As appears from the above, in one embodiment, the method according to the invention results in a sterile packed chromatography column. Thus, a specific embodiment of the present chromatography column is a disposable or single-use format, which is substantially sterile. Sterile, or substantially sterile, formats are especially advantageous for processes in the medical industry, such as the purification of a drug, where purity is crucial.

A further embodiment is a kit comprising the chromatography column according to the invention. The kit may comprise a packed chromatography column; tubings; and buffers. The kit may be provided in a substantially sterile form, wherein the parts may be preassembled.

The target compounds may be any biological compound selected from the group consisting of peptides; proteins, such as receptors and antibodies; nucleic acids, such as DNA, e.g. plasmids, RNA and oligonucleotides; virus; prions; cells, such as prokaryotic or eukaryotic cells; carbohydrates; and other organic molecules, such as drug candidates. In a specific embodiment, the target compound is a diagnostic marker. Thus, target compounds purified using the present chromatography matrix may e.g. be medical compounds, such as protein and antibody drugs; diagnostic compounds, such as antigens or diagnostic antibodies; and cells for use in therapy, such as stem cells.

A last aspect of the present invention is the use of a chromatography matrix prepared as described above to purify, isolate or remove one or more target compounds from a liquid. Thus, this aspect is a method of liquid chromatography, as discussed above, and involves adsorbing a target compound to the chromatography matrix according to the invention and optionally a subsequent step of selective desorption of the target, commonly known as gradient elution. If required, one or more washing steps are provided between the adsorption and elution. Alternatively, the present use is for retardation of a target compound, in which case the target compound(s) are selectively retarded on the column, as compared to other components. In this case, there is no need of an elution step to release the target, unless the column is to be regenerated for additional use.

As is well known in the field of chromatography, pressure drop across packed beds can be a significant problem especially in the operation of large-scale preparative chromatography columns. Factors such as the shape and aspect ratio of a packed bed; and also the flow properties of the chromatography matrix will affect the pressure drop. The present invention has shown that an agarose chromatography matrix prepared according to the invention allows substantially increased flow rates than a corresponding matrix prepared according to standard methods. Thus, in one embodiment of the present use, a liquid flow of at least about 300 cm/h is applied to a matrix comprised of essentially spherical particles that exhibit a Kₐᵥ of at least about 0.4 for dextran of molecular weight 110 kD.

A further aspect of the invention is the use of the present chromatography matrix for purification and/or isolation of target compounds for use in the food industry. Thus, the use may e.g. comprise the purification of milk proteins from whey. An advantage of using the present chromatography matrix as compared to conventional chromatography matrices is the improved rigidity of the present matrix, which allows handling of the large volumes which are commonly needed at economical flow rates and hence costs.

Finally, another specific use of the chromatography matrix obtained according to the invention is to remove small amounts of contaminants such as virus or prions from a process fluid. In this embodiment, the chromatography matrix may be particles or a membrane, preferable of single use kind to allow safe disposal of the contaminants with the used matrix.

Finally, in one embodiment, the matrix prepared according to the present method is used as support in cell culture. In an advantageous embodiment, said support is in the form of essentially spherical carrier particles, which are either suitable for suspension culture of for immobilisation to a surface. Such cultured cells may be used e.g. as a medical substance in cell therapy treatment schemes. A further use of the matrix is for immobilisation of enzymes to produce a biocatalyst.

### EXPERIMENTAL PART

The present examples are provided for illustrative purposes only, and are not to be construed as limiting the present invention as defined by the appended claims. All references given below and elsewhere in the present specification are hereby included herein by reference.

### Materials / Investigated units

Epichlorohydrin
Sodium borohydride
Sodium sulphate

### Methods

### Example 1: Preparation of cross-linked agarose beads

7 g hydroxyethyl agarose (NuSieve™ GTG, Cambrex) was dissolved under stirring in 200 ml distilled water for 30 min in a boiling water bath. The solution was charged to a 1.51 flat-bottomed glass vessel held at 60°C, containing a solution of 2 g triglycerol diisostearate (Prisorine™ 3700, Uniqema) in 300 ml toluene. The stirring rate (40 mm turbine agitator) was 400 rpm during charging and was then increased to 650 rpm for 20 min and to 800 rpm for 20 min. The hydroxyethyl agarose droplets were then gelated by cooling the vessel from 60°C to 20°C during an interval of 30 min. 1 1 ethanol was added and the vessel content was stirred for 15 min and then left to sediment. The supernatant was decanted and the beads were then washed with ethanol and water on a G3 glass filter funnel. The mode diameter of the recovered beads was 99 µm, as measured with a Malvern Mastersizer light diffraction instrument.

285 g beads obtained as described above were added to a flask and stirred at 200 rpm with a two-blade agitator. 137 g sodium sulphate was added and dissolved by heating to 50°C with 200 rpm stirring. The stirring was continued for 30 min after the target temperature of 50°C had been reached. 10.7 ml 50% NaOH was added, followed by 0.4 g sodium borohydride. 54 ml 50% NaOH and 80 ml epichlorohydrin was then pumped in over 7 h using Dosimat™ pumps (feed rates: 50% NaOH - 0.129 ml/min, epichlorohydrin 0.190 ml/min). The reaction mixture was then left under 200 rpm stirring over night at 50°C. Then the gel slurry was neutralised to pH 5.1 using 60% acetic acid and the gel was washed with water on a glass filter. Finally, the beads were sieved between 40 and 160 µm sieves.

### Example 2: Preparation of cross-linked agarose beads

Beads comprising substituted agarose in gel form were prepared in accordance with Example 1.

The beads were then cross-linked according to the same procedure as in Example 1, except that the temperature throughout was kept at 70°C.

### Example 3: Pressure-flow performance

The beads obtained as described above were packed into an HR 5/5 column (Amersham Biosciences, Uppsala, Sweden), which was attached to a P-900 pump (Amersham Biosciences, Uppsala, Sweden). A 50% ethanol solution was pumped through the column at an initial flow rate of 0.5 ml/min. The flow rate was increased in steps of 0.5 ml/min every 30 s, until a dramatic back pressure increase was observed. The highest flow rate before the pressure increase was noted as the max flow of the gel in question. The results are presented in Table 1 below.

### Example 4: Porosity determination

The beads were packed into a HR10 column, giving a bed height of 15 cm. The column was mounted in an FPLC system with LCC Plus/FPLC Director, a P-500 pump and an MV-7 UV-M detector. Coloured dextran samples (0.1% solutions, 0.2 ml) were injected and eluted isocratically with 0.05 M tris 0.15 M NaCl, pH 8,0 at a flow rate of 0.2 ml/min (15 cm/h). As a reference, a column was packed with Sepharose™ 4FF (Amersham Bioscience, Uppsala, Sweden) and evaluated in the same way. The results are presented in Table 1 below.

### Results

**Table 1**

| **Sample** | **Cross-link temp** | **Max flow** (ml/min) | **Kav* Dx** 1400kD | **Kav*** Dx 500 kD | **Kav*** Dx 110 kD |
|---|---|---|---|---|---|
| Example 1 | 50°C | 5.0 | 0.18 | 0.65 | 0.77 |
| Example 2 | 70°C | 8.5 | 0.05 | 0.63 | 0.76 |
| Sepharose™ 4FF | - | 3.5 | 0.06 | 0.56 | 0.69 |

| | | | | | |
|---|---|---|---|---|---|
| *Kav values determined in accordance with Gel Filtration Principles and Methods, Pharmacia LKB Biotechnology 1991 (ISBN 91-97-0490-2-6) | | | | | |

The beads produced according to the present invention have larger pores than the reference agarose matrix Sepharose™ 4FF and allow a considerably higher flow rate.

## Claims

1. A method of preparing a cross-linked polysaccharide chromatography matrix, which method comprises
(a) providing an aqueous solution of at least one gellable polysaccharide, wherein at least part of the hydroxyl groups are substituted with ether groups which are not susceptible to nucleophilic attack and which are selected from the group consisting of methyl, ethyl, propyl, butyl, hydroxypropyl, hydroxybutyl and hydroxyethyl ethers;
(b) providing essentially spherical droplets of the substituted polysaccharide solution;
(c) forming a gel of the substituted polysaccharide solution; and
(d) cross-linking the gel,
wherein the part of the hydroxyl groups in the polysaccharide which are substituted is 1-20%.

2. A method according to any one of the preceding claims, wherein the dissolved substituted polysaccharide is emulsified in an organic solvent.

3. A method according to any one of the preceding claims, wherein a porogen is added before gelling.

4. A method according to any one of the preceding claims, wherein the aqueous solution of polysaccharide is provided by heating and the gel is formed by reducing the temperature.

5. A method according to any one of the preceding claims, wherein the gelling point of the polysaccharide is at least about 1 °C lower than that of the corresponding non-substituted polysaccharide.

6. A method according to any one of the preceding claims, wherein the polysaccharide is agarose.

7. A method according to any one of the preceding claims, wherein the cross-linking step comprises adding a cross-linking agent.

8. A method according to any one of the preceding claims, which comprises a subsequent step of attaching chromatography ligands to hydroxyl groups of the gelled polysaccharide after cross-linking thereof.

9. A method of preparing a sterile cross-linked polysaccharide chromatography matrix, which method comprises
- preparing a cross-linked polysaccharide matrix according to the method of any one of the preceding claims;
- packing the cross-linked gel in a chromatography column; and
- sterilizing the packed column by radiation; steam; or autoclavation.

## Patentansprüche

1. Verfahren zur Herstellung einer vernetzten Polysaccharid-Chromatographiematrix, wobei das Verfahren umfasst
(a) Bereitstellen einer wässrigen Lösung von mindestens einem gelierbaren Polysaccharid, wobei mindestens ein Teil der Hydroxylgruppen mit Ethergruppen substituiert ist, welche gegenüber einem nukleophilen Angriff nicht empfindlich sind und die ausgewählt sind aus der Gruppe, bestehend aus Methyl-, Ethyl-, Propyl-, Butyl-, Hydroxypropyl-, Hydroxybutyl- und Hydroxyethylethern;
(b) Bereitstellen von im Wesentlichen kugelförmigen Tröpfchen der substituierten Polysaccharidlösung;
(c) Bilden eines Gels von der substituierten Polysaccharidlösung; und
(d) Vernetzen des Gels,
wobei der Anteil der Hydroxylgruppen in dem Polysaccharid, die substituiert werden, 1 bis 20 % beträgt.

2. Verfahren nach einem der vorhergehenden Ansprüche, wobei das gelöste substituierte Polysaccharid in einem organischen Lösemittel emulgiert wird.

3. Verfahren nach einem der vorhergehenden Ansprüche, wobei ein Porogen vor der Gelbildung hinzugefügt wird.

4. Verfahren nach einem der vorhergehenden Ansprüche, wobei die wässrige Lösung des Polysaccharids durch Erhitzen bereitgestellt wird und das Gel durch Verringerung der Temperatur gebildet wird.

5. Verfahren nach einem der vorhergehenden Ansprüche, wobei der Gelpunkt des Polysaccharids mindestens ungefähr 1 °C niedriger als der des entsprechenden nicht-substituierten Polysaccharids ist.

6. Verfahren nach einem der vorhergehenden Ansprüche, wobei das Polysaccharid Agarose ist.

7. Verfahren nach einem der vorhergehenden Ansprüche, wobei der Vernetzungsschritt das Hinzufügen eines Vernetzungsmittels umfasst.

8. Verfahren nach einem der vorhergehenden Ansprüche, das einen nachfolgenden Schritt des Anlagerns von Chromatographie-Liganden an die Hydroxylgruppen des gelierten Polysaccharids nach der Vernetzung davon umfasst.

9. Verfahren zur Herstellung einer sterilen vernetzten Polysaccharid-Chromatographiematrix, wobei das Verfahren umfasst
- Herstellen einer vernetzten Polysaccharid-Matrix gemäß dem Verfahren nach einem der vorhergehenden Ansprüche;
- Packen des vernetzten Gels in eine Chromatographiesäule; und
- Sterilisieren der gepackten Säule durch Strahlung; Dampf; oder durch Autoklavieren.

## Revendications

1. Procédé de préparation d'une matrice de chromatographie à base de polysaccharide réticulé, lequel procédé comprend :
(a) la fourniture d'une solution aqueuse d'au moins un polysaccharide gélifiable, dans lequel au moins une partie des groupements hydroxyle est substituée par des groupements éther qui ne sont pas susceptibles d'une attaque nucléophile et qui sont choisis dans le groupe constitué des éthers de méthyle, d'éthyle, de propyle, de butyle, d'hydroxypropyle, d'hydroxybutyle et d'hydroxyéthyle ;
(b) la fourniture de gouttelettes sensiblement sphériques de la solution de polysaccharide substitué ;
(c) la formation d'un gel de la solution de polysaccharide substitué ; et
(d) la réticulation du gel,
dans lequel la partie des groupements hydroxyle du polysaccharide qui sont substitués est de 1 à 20 %.

2. Procédé selon l'une quelconque des revendications précédentes, dans lequel le polysaccharide substitué dissous est émulsionné dans un solvant organique.

3. Procédé selon l'une quelconque des revendications précédentes, dans lequel un agent porogène est ajouté avant gélification.

4. Procédé selon l'une quelconque des revendications précédentes, dans lequel la solution aqueuse de polysaccharide est obtenue par chauffage et le gel est formé par réduction de la température.

5. Procédé selon l'une quelconque des revendications précédentes, dans lequel le point de gélification du polysaccharide est d'au moins environ 1 °C inférieur à celui du polysaccharide non substitué correspondant.

6. Procédé selon l'une quelconque des revendications précédentes, dans lequel le polysaccharide est de l'agarose.

7. Procédé selon l'une quelconque des revendications précédentes, dans lequel l'étape de réticulation comprend l'addition d'un agent de réticulation.

8. Procédé selon l'une quelconque des revendications précédentes, qui comprend une étape ultérieure de fixation de ligands de chromatographie à des groupements hydroxyle du polysaccharide gélifié après sa réticulation.

9. Procédé de préparation d'une matrice de chromatographie à base de polysaccharide réticulé stérile, lequel procédé comprend :
- la préparation d'une matrice de chromatographie réticulé selon l'une quelconque des revendications précédentes ;
- le garnissage du gel réticulé dans une colonne de chromatographie ; et
- la stérilisation de la colonne garnie par un rayonnement ; ou par autoclavage.
